# EUROPÄISCHE PATENTSCHRIFT

(11) **EP 1 886 826 B1**
(45) Veröffentlichungstag und Bekanntmachung des Hinweises auf die Patenterteilung: **18.08.2010**
(21) Anmeldenummer: 07011439.2
(22) Anmeldetag: 12.06.2007
(51) Int. Cl.: B41J 3/407, B41J 2/47, B23K 26/06

(54) **Vorrichtung und Verfahren zur Markierung von Einzelobjekten**
Method and device for marking individual objects
Procédé et dispositif destiné au marquage d'objets individuels

(30) Priorität: 11.08.2006 DE 102006037921
(43) Veröffentlichungstag der Anmeldung: 13.02.2008
(73) Patentinhaber: KBA-METRONIC AG, 97209 Veitshöchheim (DE)
(72) Erfinder: Müller, Udo, 97727 Fuchsstadt (DE); Schmitt, Peter, 97074 Würzburg (DE)
(74) Vertreter: Stiel, Jürgen

(56) Entgegenhaltungen:
- WO-A-01/81039
- DE-A1- 3 939 866
- FR-A- 2 824 768
- GB-A- 2 015 813
- JP-A- 6 297 168
- JP-A- 2005 211 979
- US-A1- 2003 089 690

## Beschreibung

Die Erfindung betrifft eine Vorrichtung und ein Verfahren zur Markierung, insbesondere von gewölbten Oberflächen eines Einzelobjekts mittels Lasermarkierung mit wenigstens einem frei programmierbaren Laserstrahl-Ablenksystem.

Lasermarkierungsgeräte werden in industriellen Produktionsanlagen und anderen Anwendungsbereichen häufig eingesetzt, um Einzelobjekte, z.B. Produkte oder deren Verpackungen oder auch Lebensmittel / Nahrungsmittel direkt mit unterschiedlichen Informationen / Markierungen zu versehen. Hierbei handelt es sich meist um alphanumerische Zeichen, Logos oder Strichcodes, anhand derer ein Endkunde oder ein automatisches Erfassungssystem beispielsweise das Produkt erkennen kann, dessen Verfallsdatum oder dessen Hersteller.

In zunehmendem Maße werden auch Produkte des täglichen Lebens mittels Laser markiert, um beispielsweise dekorative Elemente auf der Oberfläche eines Produktes oder dessen Verpackung zu erzeugen, wodurch dieses aufgewertet wird oder eine eindeutige Zuordnung zu dem Erzeuger erfährt, so dass ein Anwender diese Art und Ausführung des Produktes möglichst auf einen Blick dem entsprechenden Hersteller zuordnen kann.

Die Markierung selbst erfolgt durch die Einwirkung eines gebündelten Laserstrahls auf die Produktoberfläche oder die Oberfläche einer Verpackung, wodurch entweder eine zuvor aufgebrachte Farbe entfernt wird, die Oberfläche abgetragen und/oder aufgeschmolzen und / oder verkohlt wird, oder durch eine Farbveränderung, insbesondere wenn zuvor spezielle Pigmente in die zu markierende Oberfläche eingebracht worden sind, oder durch ein tieferes Abtragen der Oberfläche, so dass eine Gravur entsteht. Ziel ist es in jedem Fall, einen möglichst hohen visuellen und/oder taktilen Kontrast zum umgebenden Untergrund zu erzeugen, um so die Lesbarkeit zu erhöhen.

Verwendet werden für die Ausführung dieser Art der Markierung beispielsweise CO₂-Laser oder Nd:YAG Laser. Die Erzeugung der Markierung erfolgt dabei entweder im Maskenschussverfahren, mittels Galvanometer-Scanner oder mit kristalloptisch abgelenkten Lasern. Mit Ausnahme des Maskenschussverfahrens sind die genannten Lasermarkierungsverfahren frei programmierbar und erlauben so eine von Produkt zu Produkt variable Markierung.

Die hier zur Verfügung stehenden frei programmierbaren Markierungsgeräte wie beispielsweise die mit Galvanometer-Scanner arbeitenden Lasergeräte weisen dazu neben der Ablenkeinheit zusätzliche Optiken auf, wodurch der Laserstrahl in eine Brennebene fokussiert wird. Die Markierung erfolgt zweckmäßigerweise dann in dieser Brennebene, da hier der Brennfleck der Laserstrahlung am kleinsten ist und damit die Leistungsdichte der Laserstrahlung maximal wird, so dass im Wesentlichen nur in dieser Ebene die von dem zu markierenden Material absorbierte Laserenergie zu einer Markierung führt.

Je nach Laserleistung, Wellenlänge, Laser-Betriebsart und Absorptionsverhalten des zu markierenden Materials in dem betrachteten Wellenlängenbereich ist es auch möglich, eine Markierung oberhalb und unterhalb der Brennebene durchzuführen, wobei in diesen Bereichen die flächenbezogene Leistungsdichte der Laserstrahlung ab einer bestimmten Entfernung zur Brennebene soweit abnimmt, dass keine Markierung mehr möglich ist. Zudem vergrößert sich der Brennpunkt der Laserstrahlung mit zunehmendem Abstand von der Brennebene, so dass eine klare und hochauflösende Markierung selbst bei ausreichender Leistungsdichte nicht mehr sinnvoll ist. Damit beschränkt sich eine Lasermarkierung in dem zu markierenden Bereich auf eine im Wesentlichen flache Oberfläche, deren Rauhigkeit oder Wölbung oder Struktur aus den genannten Gründen nur innerhalb enger Grenzen zulässig ist.

Eine großflächigere Markierung beispielsweise eines kugelförmigen, oder zylinderförmigen oder allgemein eines Objektes mit einer oder mehrerer starken konkaven oder konvexen Wölbung ist in der Regel nur dadurch zu erreichen, dass das Markierungsbild in mehrere Teilbilder aufgeteilt wird und das Objekt und der Markierungslaser für jedes Teilbild so zueinander positioniert werden, dass jedes Teilbild innerhalb der oben genannten Beschränkungen liegt und damit sinnvoll markiert werden kann. Das Gesamtbild setzt sich dann aus den genannten Teilbildern zusammen. Es ist leicht einzusehen, dass insbesondere an den Grenzbereichen der Teilbilder zueinander eine hohe Passergenauigkeit erreicht werden muss, um ein in sich geschlossenes Gesamtbild zu erreichen. Hierzu ist für jedes Teilbild eine präzise Ausrichtung des Objektes zur Markierungseinrichtung erforderlich, was einen erheblichen technischen und zeitlichen Aufwand bedeutet.

Sowohl die WO 01/81039 A1 als auch die DE 39 39 866 A1 und die JP 06 297168 A offenbaren jeweils eine Vorrichtung zur Beschriftung von Oberflächen eines Einzelobjekts mittels Laserbeschriftung mit einem frei programmierbaren Laserstrahl-Ablenksystem, wobei eine Umlenkanordnung vorgesehen ist, mittels der ein Laserstrahl in Abhängigkeit von einer Ablenkung durch das wenigstens eine frei programmierbare Laserstrahlablenksystem in wenigstens zwei Raumwinkelbereiche ablenkbar ist und wobei ein im Bereich einer Überlappung / Kreuzung der Raumwinkelbereiche angeordnetes Einzelobjekt mit Laserstrahlen aus wenigstens zwei Raumwinkelbereichen markierbar ist.

Sowohl GB2015813 als auch US7372630 offenbaren Vorrichtungen zur Markierung von Oberflächen eines Einzelobjekts mittels Laserbeschriftung wobei wenigstens eine erste Umlenkanordnung vorgesehen ist, mittels der ein Laserstrahl in wenigstens zwei einander nicht überlappende erste Raumwinkelbereiche ablenkbar ist und eine der Anzahl der ersten Raumwinkelbereiche entsprechende Anzahl von zweiten Umlenkanordnungen vorgesehen ist, mittels denen ein Laserstrahl aus jedem ersten Raumwinkelbereich in einen jeweiligen zweiten Raumwinkelbereich in die Richtung eines zu markierenden Einzelobjekts ablenkbar ist, wobei sich die zweiten Raumwinkelbereiche zumindest teilweise überlappen, so das ein im Bereich der Überlappung der zweiten Raumwinkelbereiche angeordnetes Einzelobjekt mit Laserstrahlen aus wenigstens zwei Raumwinkelbereichen markierbar ist. Diese Vorrichtungen ermangeln jedoch eines frei programmierbaren Laserstrahl-Ablenksystems.

Sowohl die FR 2 2824 768 A1 als auch die JP 2005 244979 A offenbaren jeweils ein Verfahren, bei dem eine Markierung in der Oberfläche eines Einzelobjektes durch eine Anzahl von Teilmarkierungen zusammengesetzt wird. Dabei wird das Einzelobjekt zwischen dem Aufbringen-von Teilmarkierungen neu ausgerichtet.

Aufgabe der Erfindung ist es, die genannten Nachteile zu beseitigen und eine Vorrichtung und ein Verfahren zur Markierung zu schaffen, mittels der/dem es möglich ist auch stark gekrümmte und ausgedehnte Oberflächen hochwertig zu markieren, ohne dass eine aufwändige manuelle oder automatische Bewegung weder der Vorrichtung noch des zu markierenden Objekts ausgeführt werden muss.

Erfindungsgemäß wird die Aufgabe durch eine Vorrichtung gemäss Anspruch 1 gelöst, wobei wenigstens eine erste Umlenkanordnung vorgesehen ist, mittels der ein Laserstrahl in Abhängigkeit von einer Ablenkung durch ein frei programmierbares Laserstrahlablenksystem in wenigstens zwei, insbesondere einander nicht überlappende erste Raumwinkelbereiche ablenkbar ist und weiterhin eine der Anzahl der ersten Raumwinkelbereiche entsprechende Anzahl von zweiten Umlenkanordnungen vorgesehen ist, mittels denen ein Laserstrahl aus jedem ersten Raumwinkelbereich in einen jeweiligen zweiten Raumwinkelbereich in die Richtung eines zu markierenden Einzelobjekts ablenkbar ist, wobei sich die zweiten Raumwinkelbereiche zumindest teilweise überlappen/kreuzen, so dass ein im Bereich der Überlappung / Kreuzung der zweiten Raumwinkelbereiche angeordnetes Einzelobjekt mit Laserstrahlen aus wenigstens zwei Raumwinkelbereichen markierbar ist.

Die Aufgabe wird weiterhin durch ein Verfahren gemäss Anspruch 9 gelöst, bei dem ein Laserstrahl mit wenigstens einer ersten Umlenkanordnung in Abhängigkeit von einer vorherigen Ablenkung durch ein frei programmierbares Laserstrahlablenksystem in wenigstens zwei, insbesondere einander nicht überlappende erste Raumwinkelbereiche abgelenkt wird und ein Laserstrahl aus jedem ersten Raumwinkelbereich durch eine zweite Umlenkanordnung in einen jeweiligen zweiten Raumwinkelbereich in die Richtung eines zu markierenden Einzelobjekts abgelenkt wird, wobei sich die zweiten Raumwinkelbereiche zumindest teilweise überlappen/kreuzen, so dass ein im Bereich der Überlappung / Kreuzung der zweiten Raumwinkelbereiche angeordnetes Einzelobjekt mit Laserstrahlen aus wenigstens zwei Raumwinkelbereichen markiert wird.

Wesentlicher Kerngedanke der Erfindung ist es mit einem erfindungsgemäßen Verfahren bzw. einer erfindungsgemäßen Vorrichtung ein zu markierendes, insbesondere ortsfestes und stationäres Einzelobjekt nunmehr nicht nur ausschließlich aus einem Raumwinkelbereich heraus zu markieren, sondern aus mehreren Raumwinkelbereichen, insbesondere wenigstens zwei Raumwinkelbereichen. Hierdurch kann eine Optimierung einer Markierung auf einer gekrümmten Oberfläche eines zu markierenden Objektes erfolgen, ohne dass das zu markierende Einzelobjekt neu ausgerichtet werden muss.

In den Ausführungen des Standes der Technik ergab sich nur eine Brennebene, da ein Laserstrahl im Wesentlichen aus nur einer Richtung, bzw. wegen der Ablenkung nur aus einem Raumwinkelbereich auf ein zu markierendes Einzelobjekt trifft. Weist dieses Einzelobjekt eine starke Krümmung in der Oberfläche auf, so liegt diese nur teilweise in der Brennebene. Durch die Beleuchtung eines Einzelobjektes aus mehreren, insbesondere wenigstens zwei Raumwinkelbereichen kann die Lage der zu markierenden Oberfläche eines Einzelobjektes besser hinsichtlich der dann entstehenden mehreren Brennebenen optimiert werden. Es kann so ein größerer zusammenhängender Bereich der gekrümmten Oberfläche eines Einzelobjektes markiert werden, insbesondere wenn es sich um im Wesentlichen zylinder- oder kugelförmige Oberflächen handelt.

Ein Laserstrahl wird somit zunächst mittels einer programmierbaren Ablenkeinheit abgelenkt, um eine gewünschte Markierung zu erhalten. Dies kann z.B. durch eine Galvanometer-Scanner-Vorrichtung erfolgen oder jede andere geeignete Vorrichtung.

Das Abbild einer Markierung kann hierzu vorher in einer übergeordneten Steuerung erstellt werden, z.B. mittels eines Grafikprogrammes auf einem Computer. Ein solches Abbild kann z.B. als Vektorgrafik gespeichert werden. Das auf einem üblicherweise im Wesentlichen planen Monitor erstellte Abbild kann mittels einer Software, sofern gewünscht, derart in Abhängigkeit einer zu markierenden gekrümmten Oberfläche eines Einzelobjekte verzerrt werden, dass es nach der Markierung bei Betrachtung von der gekrümmten Oberflächen aus nur einer Richtung ohne eine Verzerrung dem Betrachter erscheint.

Das Abbild einer Markierung wird dabei mittels eines Laserstrahls im Wesentlichen scannend abgefahren. In Abhängigkeit von einer Ablenkung wird dann der durch die Ablenkeinheit abgelenkte Strahl mittels einer ersten Umlenkanordnung in wenigstens zwei verschiedene erste Raumwinkelbereiche abgelenkt. Diese verschiedenen ersten Raumwinkelbereiche werden z.B, erreicht, wenn der durch die programmierbare Ablenkeinheit abgelenkte Strahl die erste Umlenkanordnung in verschiedenen Bereichen trifft. Trifft der Laserstrahl z.B. einen ersten Bereich A der ersten Umlenkanordnung, so wird er in einen ersten Raumwinkelbereich A abgelenkt, trifft er die Umlenkanordnung in einem Bereich B, so wird er in einen ersten Raumwinkelbereich B abgelenkt und so fort.

Hierbei kann es bevorzugt vorgesehen sein, dass sich alle erste Raumwinkelbereiche nicht überschneiden. Bei nur zwei Raumwinkelbereichen können diese z.B. im Wesentlichen einander entgegengesetzt ausgerichtet sein.

Eine erste Umlenkanordnung kann z.B. durch wenigstens zwei Spiegel ausgebildet sein, die in einem Winkel zueinander angeordnet sind, insbesondere wobei sich die Spiegel an benachbarten Kanten berühren. Jeder der Spiegel bildet einen Bereich der Umlenkanordnung im oben genannten Sinn. Die Anzahl der Spiegel ergibt dabei die Anzahl der verschiedenen möglichen ersten Raumwinkelbereiche. Um zwei erste Raumwinkelbereiche zu erhalten kann eine Umlenkanordnung z.B. durch zwei Spiegel ausgebildet sein, die zueinander in einem Winkel von 90 Grad angeordnet sind, insbesondere wobei sich zwei Kanten der beiden Spiegel berühren. Diese Kante der Umlenkanordnung kann zur programmierbaren Ablenkeinheit weisen. Um z.B. 4 erste Raumwinkelbereiche zu erhalten kann eine Umlenkanordnung durch 4 Spiegel gebildet sein, die pyramidenförmig angeordnet sind, wobei diese Anordnung mit der Pyramidenspitze in Richtung zur programmierbaren Ablenkeinheit ausgerichtet sein kann.

Da die einzelnen möglichen ersten Raumwinkelbereiche, die ihren Ursprung somit alle in der ersten Umlenkanordnung haben, alle voneinander weg weisen ist es gemäß der Erfindung vorgesehen, einen jeden Laserstrahl aus einem der zuvor definierten ersten Raumwinkelbereichen in einen zweiten Raumwinkelbereich umzulenken. Es ist somit jedem der ersten Raumwinkelbereichen in die ein Laserstrahl abgelenkt werden kann durch Umlenkung jeweils ein zweiter Raumwinkelbereich zugeordnet. Hierbei erfolgt die Umlenkung durch jeweilige zweite Umlenkanordnungen derart, dass ein Laserstrahl, der sich in einem zweiten Raumwinkelbereich fortbewegt auf eine zu markierende Oberfläche eines Einzelobjektes trifft. Ein solches Einzelobjekt wird somit je nach der programmierten Ablenkung aus verschiedenen zweiten Raumwinkelbereichen (wenigstens zwei) beleuchtet, um eine Markierung in die gekrümmte Oberfläche einzubringen. Diese zweiten Raumwinkelbereiche werden sich bevorzugt zumindest teilweise überschneiden bzw. überlappen.

Um die Markierung vorzunehmen wird somit in vorteilhafter Weise ein Einzelobjekt derart positioniert, dass eine zu markierende Oberfläche im Bereich einer Überschneidung / Überlappung der verschiedenen zweiten Raumwinkelbereiche angeordnet ist.

Gemäß der Erfindung kann es sodann vorgesehen sein, dass sich eine Markierung, insbesondere Gesamtmarkierung in der Oberfläche eines Einzelobjektes durch eine der Anzahl der-ersten/zweiten Raumwinkelbereiche entsprechende Anzahl von Teilmarkierungen zusammensetzt, wobei jede Teilmarkierung aus einem anderen Raumwinkelbereich in die Oberfläche eingebracht wird.

Es kann dabei vorgesehen sein, dass mittels einer übergeordneten Steuerung, z.B. einer Software eine Gesamtmarkierung zunächst in Teilmarkierungen zerlegt wird und sodann die jeweils gegebenen Teilmarkierungen in die Oberfläche eingebracht werden.

Hierbei kann die erfindungsgemäße Vorrichtung derart justiert werden, dass die Teilmarkierungen direkt aneinander angrenzen, um eine in sich geschlossene Gesamtmarkierung auszubilden. Dadurch, dass lediglich ein insbesondere kleiner Bereich der Gesamtmarkierung mittels eines jeweils unter einem anderen Winkel (aus einem anderen Raumwinkelbereich) auftreffenden Laserstrahls markiert wird, ist es möglich, jede Teilmarkierung innerhalb des jeweils zulässigen Tiefenschärfebereiches zu markieren und so eine Gesamtmarkierung zu erzeugen, welche als Ganzes eine konturenscharfe Markierung über die gesamte gewölbte Oberfläche aufweist.

Es kann auch vorgesehen sein, das eine der Anzahl von Raumwinkelbereichen entsprechende Zahl von gleichen oder verschiedenen jeweils einzelnen Markierungen mittels der Erfindung in die Oberfläche eines Einzelobjektes eingebracht wird. So kann nach einer Markierung ein Einzelobjekt z.B. an verschiedenen Positionen die gleiche oder auch unterschiedliche Abbildungen aufweisen.

Hierbei kann es auch vorgesehen sein, die Teilmarkierungen einer Markierung in einer übergeordneten Steuerung zu vertauschen und/oder zu spiegeln, z.B. wenn sich die zweiten Raumwinkelbereiche oberhalb der zu markierenden, insbesondere konkaven Oberfläche kreuzen, so dass sich die Teilmarkierungen auf der Oberfläche des zu markierenden Einzelobjektes seitenrichtig zu einer Gesamtmarkierung zusammenfügen.

Grundsätzlich kann es vorgesehen sein, die Markierung mit parallelen unfokussierten Laserstrahlen durchzuführen. Bevorzugt werden jedoch die Laserstrahlen derart fokussiert werden, dass in jedem der zweiten Raumwinkelbereiche der zu markierende Bereich der Oberfläche eines zu markierenden Einzelobjekts in einem Tiefenschärfenbereich um die Brennebene herum angeordnet ist.

Hierfür kann im Strahlengang eines Laserstrahles wenigstens ein fokussierendes Element angeordnet sein, insbesondere eine Linse oder ein gewölbter Spiegel. Es können auch für jeden oder einzeln der ersten oder zweiten Raumwinkelbereiche unterschiedliche fokussierende Elemente vorgesehen sein, insbesondere mit verschiedenen Brennweiten. Bevorzugt kann direkt eine erste und/oder zweite Umlenkanordnung fokussierend ausgebildet ist, insbesondere als gewölbter Spiegel. Ist eine Linse als fokussierendes Element vorgesehen, so kann eine Umlenkanordnung als planarer Umlenkspiegel ausgebildet sein.

Mittels der Erfindung besteht die Möglichkeit Einzelobjekte mit beliebigen gekrümmten Oberflächen, insbesondere mit konkaven oder konvexen Oberflächen zu markieren. Hierbei können die Strahlengänge der Laserstrahlen von der ersten Umlenkanordnung über die verschiedenen zweiten Umlenkanordnungen bis zum Einzelobjekt im Wesentlichen immer gleich, aber auch verschieden sein.

Bei allen Ausführungen der Erfindung kann es auch vorgesehen sein, dass nach wenigstens einer zweiten Umlenkanordnung wenigstens eine weitere dritte und ggfs. folgende vierte Umlenkanordnungen, im Wesentlichen der gleichen Art angeordnet sind.

Bei den Einzelobjekten kann es sich im Wesentlichen um solche mit kugelförmiger oder zylindrischer Oberfläche handeln. Bei zylindrischen Einzelobjekten kann es dabei vorgesehen sein, dass eine Beleuchtung mit Laserstrahlen aus zwei verschiedenen Raumwinkelbereichen erfolgt, die im Wesentlichen senkrecht zur Zylinderachse angeordnet sind. Hierbei wird die Winkelangabe verstanden im Bezug zu einem Strahl im Zentrum des jeweiligen Raumwinkelbereichs.

Der Stand der Technik, sowie Ausführungen der Erfindung sind in den nachfolgenden Figuren dargestellt. Es zeigen:
- Figur 1:: schematisch eine Lasermarkierung der bekannten Art;
- Figur 2:: schematisch die Markierungsgrenzen bei stark gekrümmten Oberflächen
- Figur 3: eine erste erfindungsgemäße Ausführung mit einer gemeinsamen fokussierenden Optik zur Markierung einer konvexen Oberfläche
- Figur 4: eine zweite erfindungsgemäße Ausführung zur Markierung einer konkaven Oberfläche

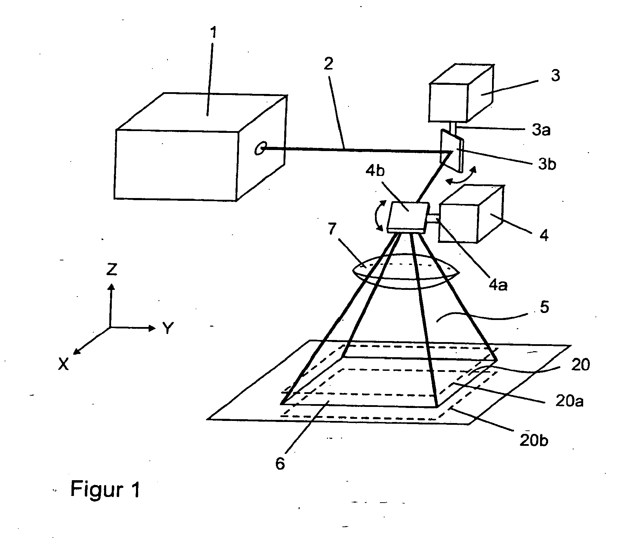

Figur 1 zeigt schematisch eine bekannte Ausführung einer Anordnung zur Lasermarkierung mittels Galvanometer-Scanner. Der von einer Laserstrahlquelle 1 erzeugte Laserstrahl 2 wird über die auf den Achsen 3a und 4a der Galvanometer Scanner 3 und 4 befestigten Umlenkspiegeln 3b und 4b über eine nicht dargestellte frei programmierbare Steuerung so in X- und Y-Richtung abgelenkt, dass ein Markierungskegel 5 überstrichen werden kann, wodurch ein Markierungsfeld 6 erzeugt wird.

Eine sich im Strahlengang befindliche Fokussieroptik 7 (Linse) bündelt den Laserstrahl 2 zudem in eine Brennebene 20, in welcher der Laserstrahl seinen Brennpunkt und damit seine minimale Ausdehnung in X- und Y-Richtung aufweist und damit die flächenbezogene Laserleistung maximal wird. Zweckmäßigerweise wird für eine Markierung eine zu markierende Oberfläche in diese Ebene gelegt, da hier aufgrund des minimalen Brennflecks und der daraus resultierenden höchsten Leistungsdichte die konturenschärfste und effektivste Markierung erfolgt.

Ein Verschieben der zu markierenden Oberfläche entlang der Z-Achse weg von der Brennebene 20 bewirkt eine Vergrößerung des Brennpunktes und damit eine quadratische Verkleinerung der Leistungsdichte, so dass nur innerhalb eines Tiefenschärfebereiches 20a bis 20b, der durch eine obere Grenzfläche 20a und eine untere Grenzfläche 20b bestimmt ist noch befriedigende Markierungsergebnisse erzielt werden. Außerhalb dieses Bereiches sind die erzielbaren Markierungsergebnisse unbefriedigend oder eine Markierung ist gar unmöglich.

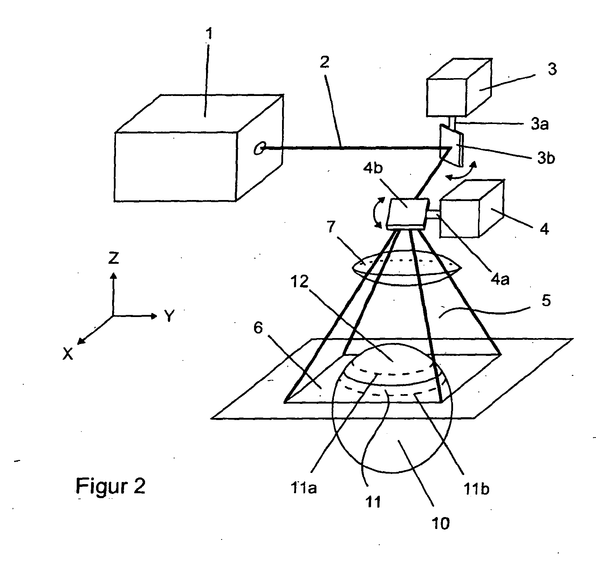

Soll wie in Figur 2 schematisch dargestellt eine stark gekrümmte Oberfläche 10 großflächig beschriftet werden, so ist es nicht mehr möglich alle zu beschriftenden Bereiche der Oberfläche 10 innerhalb eines für eine sinnvolle Beschriftung noch zulässigen Bereiches 11, begrenzt durch eine obere Grenze 11a und eine untere Grenze 11 b (Tiefenschärfebereich), zu halten. Vielmehr wird wenigstens ein Bereich 12 der zu beschriftenden Oberfläche 10 nicht in dem Bereich 11 liegen, so dass dieser nur noch unbefriedigend oder gar nicht beschriftet werden kann oder nur gemäß des Standes der Technik wie bereits beschrieben mit Teilbildern in einem oder mehreren weiteren Durchgängen beschriftet werden muss.

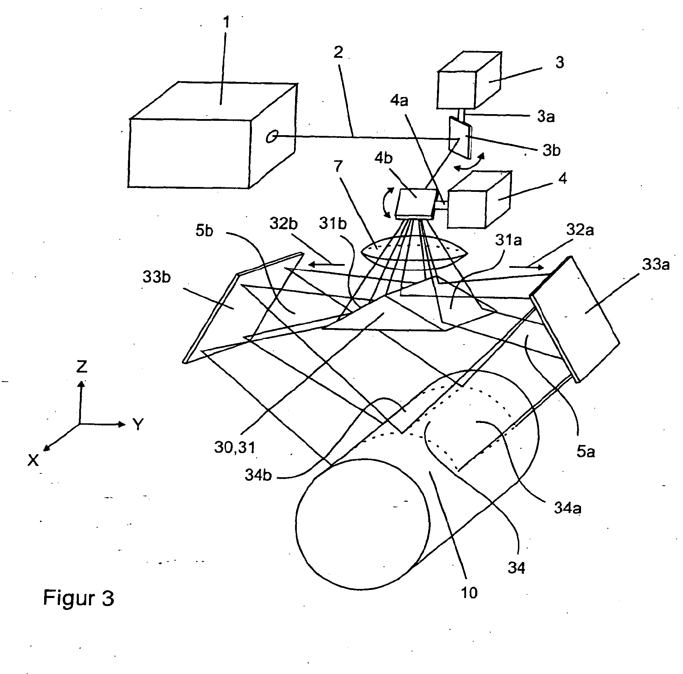

Eine erste erfindungsgemäße Ausführung zeigt Figur 3. Der von einer Laserstrahlquelle 1 erzeugte Laserstrahl 2 wird über die auf den Achsen 3a und 4a der Galvanometer Scanner 3 und 4 befestigten Umlenkspiegeln 3b und 4b über eine nicht dargestellte frei programmierbare Steuerung in X- und Y-Richtung abgelenkt und über eine nachfolgende Fokussieroptik 7 (Linse) in einer Brennebene fokussiert. Unmittelbar nach der Optik 7 befindet sich eine optische Umlenkanordnung 30, beispielsweise eine Spiegelanordnung 31, wodurch der je nach der vorausgehenden X- und Y- Ablenkung unter unterschiedlichen Winkeln aus der Optik 7 austretende Laserstrahl 2 in wenigstens zwei unterschiedliche erste Raumbereiche 5a und 5b abgelenkt wird.

Werden beispielsweise in der Spiegelanordnung 31 zwei Umlenkspiegel 31 a und 31 b verwendet, die zueinander einen bestimmten Winkel beispielsweise 90 Grad einnehmen und beispielsweise eine prismenähnliche Figur bilden, so wird ein auf die verspiegelte Fläche 31 a bzw. 31 b auftreffender Laserstrahl 2 je nach der zuvor erfolgten Ablenkung entweder in die Richtung 32a oder 32b abgelenkt, wodurch sich in diesem Beispiel zwei Markierungskegel 5a und 5b ergeben, welche unterschiedliche erste Raumwinkelbereiche bilden.

Mittels der jeweils nachgeschalteten zweiten Umlenkanordnung aus Umlenkspiegeln 33a und 33b werden nun diese Markierungskegel 5a bzw. 5b so umgelenkt, dass die zu beschriftende Oberfläche des Einzelobjektes 10 aus unterschiedlichen zweiten Raumwinkelbereichen in den Teilflächen 34a bzw. 34b so markiert wird, dass sich die Teilflächen zu einer gemeinsamen Markierungsfläche 34 ergänzen.

Der Abstand der jeweiligen Teilflächen 34a und 34b von der Fokussieroptik 7 entspricht dabei der Brennweite der verwendeten Optik 7, so dass jede Teilfläche 34a und 34b jeweils im Wesentlichen in der Brennebene liegt. Hierzu können die Umlenkspiegel 33a und 33b jeweils verschiebbar und / oder verdrehbar in einer nicht dargestellten Halterung befestigt sein, um so die jeweiligen Abstände der zu beschriftenden Teilflächen zu der Markierungsoptik 7 anzupassen.

Bei einer Beschriftung von im Wesentlichen immer gleichen Einzelobjekten erfolgt diese Einstellung einmalig. Darüber hinaus liegen bei geeigneter Wahl der Auftreffrichtungen der Markierungskegel 5a und 5b auf die Oberfläche des zu markierenden Einzelobjektes 10 die jeweiligen Teilflächen 34a und 34b jeweils innerhalb der zulässigen Tiefenschärfe, so dass die gesamte Markierung in,der Markierungsfläche 34 insgesamt innerhalb der zulässigen Tiefenschärfe liegt und damit eine Markierung mit hoher Qualität möglich wird. Es ist selbstverständlich ebenfalls möglich den Markierungskegel in mehr als die beispielhaft genannten zwei Teilkegel aufzuspalten, beispielsweise in drei, vier oder mehr Teilkegel um so beispielsweise kugelförmige oder kegelförmige Oberflächen zu beschriften.

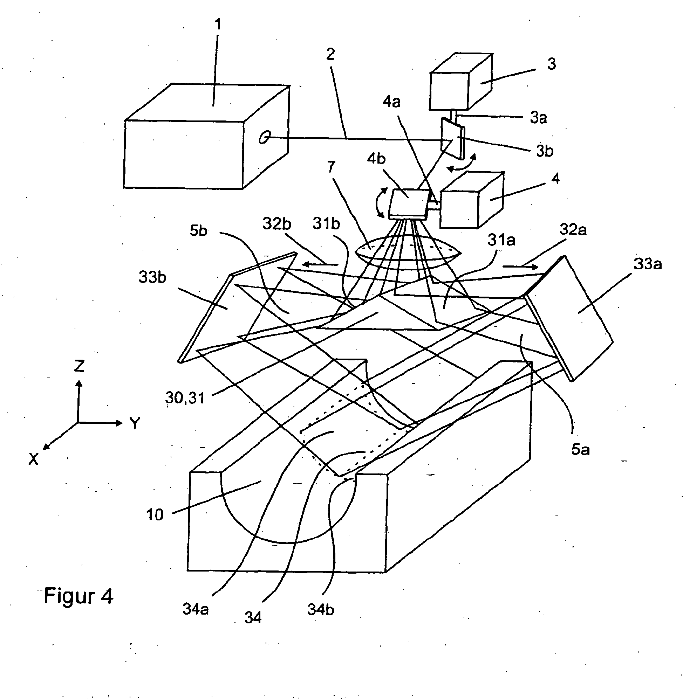

Es ist weiterhin möglich in einer alternativen erfindungsgemäßen Ausführung ebenso ausgedehnte konkave Oberflächen zu markieren wie in Figur 4 gezeigt. Die Anordnung ist im Wesentlichen zu der in Figur 3 beschriebenen Anordnung gleich bis auf die geometrische Lage der Teilflächen 34a und 34b zueinander auf der Oberfläche 10 des zu beschriftenden Objektes. In diesem Fall überkreuzen sich die Markierungskegel (zweiten Raumwinkelbereiche), so dass die Teilflächen ebenfalls über Kreuz miteinander vertauscht sind. Um ein in sich geschlossenes und seitenrichtiges Markierungsbild 34 zu erzeugen müssen in diesem Fall ebenfalls die jeweiligen Teilbilder in der Markierungssoftware der Markierungseinheit vertauscht und zusätzlich gespiegelt werden.

Es kann weiterhin zweckmäßig sein, auf eine Markierungsoptik 7 zu verzichten. In diesem Fall werden die Umlenkspiegel 31 a bzw. 31 b und / oder 33a bzw. 33b als Wölbspiegel ausgeführt, wodurch der Laserstrahl 2 in ähnlicher Weise in eine im Wesentlichen auf der zu beschriftenden Oberfläche des Objektes liegende Brennebene fokussiert wird. Die Ausführung der Wölbspiegel kann dabei sphärisch, parabolisch, hyperbolisch oder ähnlich oder auch als Off-Axis-Spiegel sein, je nach Erfordernis.

Zur Beschriftung sind ohne Beschränkung der Allgemeinheit alle Laser geeignet, deren Laserwellenlänge, Laserleistung und Betriebsregime eine im jeweiligen Markierungsfall ausreichende Markierung ermöglichen, beispielsweise Gaslaser wie CO₂-Laser, Argonlaser, Metalldampflaser, lonenlaser, Excimerlaser etc. oder Halbleiterlaser oder Festkörperlaser wie Nd: Festkörper Laser, Rubinlaser, Alexandritlaser, Saphirlaser oder auch freie Elektronenlaser.

## Patentansprüche

1. Vorrichtung zur Markierung, insbesondere Beschriftung von gewölbten Oberflächen eines Einzelobjekts mittels Laserbeschriftung mit wenigstens einem frei programmierbaren Laserstrahl-Ablenksystem (3; 4), wobei
a. wenigstens eine erste Umlenkanordnung (30; 31) vorgesehen ist, mittels der ein Laserstrahl (2) in Abhängigkeit von einer Ablenkung durch das wenigstens eine frei programmierbare Laserstrahlablenksystem (3; 4) in wenigstens zwei, insbesondere einander nicht überlappende erste Raumwinkelbereiche (5a; 5b) ablenkbar ist und
b. eine der Anzahl der ersten Raumwinkelbereiche (5a; 5b) entsprechende Anzahl von zweiten Umlenkanordnungen (33a; 33b) vorgesehen ist, mittels denen ein Laserstrahl (2) aus jedem ersten Raumwinkelbereich (5a; 5b) in einen jeweiligen zweiten Raumwinkelbereich in die Richtung eines zu markierenden Einzelobjekts (10) ablenkbar ist, wobei sich die zweiten Raumwinkelbereiche zumindest teilweise überlappen/kreuzen, so dass
c. ein im Bereich der Überlappung / Kreuzung der zweiten Raumwinkelbereiche angeordnetes Einzelobjekt (10) mit Laserstrahlen (2) aus wenigstens zwei Raumwinkelbereichen markierbar ist.

2. Vorrichtung nach Anspruch 1, **dadurch gekennzeichnet, dass** eine Markierung in der Oberfläche eines Einzelobjektes (10) durch eine der Anzahl der ersten/zweiten Raumwinkelbereiche (5a; 5b) entsprechende Anzahl von Teilmarkierungen (34a; 34b) zusammensetzbar ist, wobei jede Teilmarkierung (34a; 34b) aus einem anderen Raumwinkelbereich in die Oberfläche einbringbar ist.

3. Vorrichtung nach Anspruch 1, **dadurch gekennzeichnet, dass** im Strahlengang eines Laserstrahles (2) wenigstens ein fokussierendes, insbesondere verschiebliches / verdrehbares Element (7) angeordnet ist, insbesondere eine Linse (7) oder ein gewölbter Spiegel.

4. Vorrichtung nach Anspruch 1, **dadurch gekennzeichnet, dass** eine Umlenkanordnung fokussierend ausgebildet ist, insbesondere als gewölbter Spiegel.

5. Vorrichtung nach Anspruch 1, **dadurch gekennzeichnet, dass** eine Umlenkanordnung (30) als planarer und/oder verschieblicher / verdrehbarer Umlenkspiegel (30) ausgebildet ist.

6. Vorrichtung nach Anspruch 1, **dadurch gekennzeichnet, dass** die Laserstrahlen (2) derart fokussiert sind, dass in jedem der zweiten Raumwinkelbereiche der zu beschriftende Bereich der Oberfläche eines zu markierenden Einzelobjekts (10) in einem Tiefenschärfenbereich um die Brennebene herum angeordnet ist.

7. Vorrichtung nach Anspruch 1, **dadurch gekennzeichnet, dass** mit ihr konvex und/oder konkav gewölbte Oberflächen eines Einzelobjekts (10) markierbar sind.

8. Vorrichtung nach Anspruch 1, **dadurch gekennzeichnet, dass** die Teilmarkierungen (34a; 34b) einer Markierung in einer übergeordneten Steuerung vertauscht und/oder gespiegelt angeordnet werden und sich die zweiten Raumwinkelbereiche oberhalb der zu beschriftenden, insbesondere konkaven Oberfläche kreuzen und sich die Teilmarkierungen (34a; 34b) auf der Oberfläche des zu beschriftenden Einzelobjektes (10) seitenrichtig zu einer Gesamtmarkierung zusammenfügen.

9. Verfahren zur Markierung, insbesondere Beschriftung von gewölbten Oberflächen eines Einzelobjekts mittels Laserbeschriftung mit wenigstens einem frei programmierbaren Laserstrahl-Ablenksystem (3; 4), wobei
a. ein Laserstrahl (2) mit wenigstens einer ersten Umlenkanordnung (30; 31) in Abhängigkeit von einer vorherigen Ablenkung durch das wenigstens eine frei programmierbare Laserstrahlablenksystem (3; 4) in wenigstens zwei, insbesondere einander nicht überlappende erste Raumwinkelbereiche (5a; 5b) abgelenkt wird und
b. ein Laserstrahl (2) aus jedem ersten Raumwinkelbereich (5a; 5b) durch eine zweite Umlenkanordnung (33a; 33b) in einen jeweiligen zweiten Raumwinkelbereich in die Richtung eines zu markierenden Einzelobjekts (10) abgelenkt wird, wobei sich die zweiten Raumwinkelbereiche zumindest teilweise überlappen/kreuzen, so dass
c. ein im Bereich der Überlappung / Kreuzung der zweiten Raumwinkelbereiche angeordnetes Einzelobjekt (10) mit Laserstrahlen (2) aus wenigstens zwei Raumwinkelbereichen markiert wird.

10. Verfahren nach Anspruch 9, **dadurch gekennzeichnet, dass** eine Markierung in der Oberfläche eines Einzelobjektes durch eine der Anzahl der ersten/zweiten Raumwinkelbereiche (5a; 5b) entsprechende Anzahl von Teilmarkierungen (34a; 34b) zusammengesetzt wird, wobei jede Teilmarkierung (34a; 34b) aus einem anderen zweiten Raumwinkelbereich in die Oberfläche eingebracht wird.

11. Verfahren nach Anspruch 9, **dadurch gekennzeichnet, dass** die Laserstrahlen (2) derart fokussiert werden, dass in jedem der zweiten Raumwinkelbereiche der zu beschriftende Bereich der Oberfläche eines zu markierenden Einzelobjekts (10) in einem Tiefenschärfenbereich um die Brennebene herum angeordnet ist.

12. Verfahren nach Anspruch 9, **dadurch gekennzeichnet, dass** die Teilmarkierungen (34a; 34b) einer Markierung in einer übergeordneten Steuerung vertauscht und/oder gespiegelt angeordnet werden und sich die zweiten Raumwinkelbereiche oberhalb der zu markierenden, insbesondere konkaven Oberfläche kreuzen, so dass sich die Teilmarkierungen (34a; 34b) auf der Oberfläche des zu markierenden Einzelobjektes (10) seitenrichtig zu einer Gesamtmarkierung zusammenfügen.

13. Verfahren nach einem Anspruch 9, **dadurch gekennzeichnet, dass** Teilmarkierungen (34a; 34b) vollständig und nacheinander jeweils aus einem Raumwinkelbereich erstellt werden.

## Claims

1. Device for marking, in particular inscribing, curved surfaces of an individual object by means of laser inscription with at least one freely programmable laser beam deflection system (3; 4),
a) at least one first deflection arrangement (30; 31) being provided, by means of which a laser beam (2) can be deflected as a function of a deflection by the at least one freely programmable laser beam deflection system (3; 4) in at least two first solid angle regions (5a; 5b), in particular not overlapping one another, and
b) a number of second deflection arrangements (33a; 33b) which corresponds to the number of first solid angle regions (5a; 5b) being provided, by means of which a laser beam (2) can be deflected from each first solid angle region (5a; 5b) into a respective second solid angle region in the direction of an individual object (10) to be marked, the second solid angle regions at least partly overlapping/intersecting, so that
c) an individual object (10) arranged in the region of the overlap/intersection of the second solid angle regions can be marked with laser beams (2) from at least two solid angle regions.

2. Device according to Claim 1, **characterized in that** a mark in the surface of an individual object (10) can be composed of a number of part-marks (34a; 34b) which corresponds to the number of first/second solid angle regions (5a; 5b), each part-mark (34a; 34b) being capable of being made in the surface from another solid angle region.

3. Device according to Claim 1, **characterized in that** at least one focusing, in particular displaceable/rotatable element (7) is arranged in the beam path of a laser beam (2), in particular a lens or a curved mirror.

4. Device according to Claim 1, **characterized in that** a deflection arrangement is formed so as to be capable of focusing, in particular as a curved mirror.

5. Device according to Claim 1, **characterized in that** a deflection arrangement (30) is in the form of a planar and/or displaceable/rotatable deflection mirror (30).

6. Device according to Claim 1, **characterized in that** the laser beams (2) are focused in such a way that, in each of the second solid angle regions, that region of the surface of an individual object (10) to be marked which is to be inscribed is arranged in a depth of focus region around the focal plane.

7. Device according to Claim 1, **characterized in that** convex and/or concave surfaces of an individual object (10) can be marked with said device.

8. Device according to Claim 1, **characterized in that** the part-marks (34a; 34b) of a mark are arranged interchanged and/or as mirror images in a superior control and the second solid angle regions intersect above the surface, in particular concave surface, to be inscribed and the part-marks (34a; 34b) join together without lateral inversion on the surface of the individual object (10) to be inscribed to give a total mark.

9. Method for marking, in particular inscribing, curved surfaces of an individual object by means of laser inscription with at least one freely programmable laser beam deflection system (3; 4),
a) a laser beam (2) being deflected with at least one first deflection arrangement (30; 31) as a function of a preceding deflection by the at least one freely programmable laser beam deflection system (3; 4) in at least two first solid angle regions (5a; 5b), in particular not overlapping one another, and
b) a laser beam (2) being deflected from each first solid angle region (5a; 5b) by a second deflection arrangement (33a; 33b) into a respective second solid angle region in the direction of an individual object (10) to be marked, the second solid angle regions at least partly overlapping/intersecting so that
c) an individual object (10) arranged in the region of the overlap/intersection of the second solid angle regions is marked with laser beams (2) from at least two solid angle regions.

10. Method according to Claim 9, **characterized in that** a mark in the surface of an individual object is composed of a number of part-marks (34a; 34b) which corresponds to the number of first/second solid angle regions (5a; 5b), each part-mark (34a; 34b) being made in the surface from another second solid angle region.

11. Method according to Claim 9, **characterized in that** the laser beams (2) are focused in such a way that, in each of the second solid angle regions, that region of the surface of an individual object (10) to be marked which is to be inscribed is arranged in a depth of focus region around the focal plane.

12. Method according to Claim 9, **characterized in that** the part-marks (34a; 34b) of a mark are arranged interchanged and/or as mirror images in a superior control and the second solid angle regions intersect above the surface, in particular concave surface, to be inscribed, so that the part-marks (34a; 34b) join together without lateral inversion on the surface of the individual object (10) to be marked to give a total mark.

13. Method according to Claim 9, **characterized in that** part-marks (34a; 34b) are produced completely and in succession in each case from one solid angle region.

## Revendications

1. Dispositif de marquage, en particulier d'application d'inscriptions sur des surfaces bombées d'un objet individuel au moyen d'une inscription au laser, avec au moins un système de déflexion de rayon laser (3 ; 4) susceptible d'être programmé librement, où
a) au moins un premier dispositif de déviation (30 ; 31) est prévu, au moyen duquel un rayon laser (2) est susceptible d'être dévié en fonction d'une déviation effectuée au moyen du au moins un système de déflexion de rayon laser (3 ; 4) susceptible d'être programmé librement, dans au moins deux premières plages d'angles solides (5a ; 5b), en particulier ne se chevauchant pas les unes les autre, et
b) un nombre, correspondant au nombre des premières plages d'angles solides (5a ; 5b), de deuxièmes dispositifs de déviation (33a ; 33b) est prévu, au moyen desquels un rayon laser (2) provenant de chaque première plage d'angles solides (5a ; 5b) est susceptible d'être dévié dans une deuxième plage d'angles solides respective, dans la direction d'un objet individuel (10) à marquer, les deuxièmes plages d'angles solides se chevauchant/se croisant au moins partiellement, de manière qu'
c) un objet individuel (10), disposé dans la zone de chevauchement/croisement des deuxièmes plages d'angles solides, puisse être marqué à l'aide de rayons laser (2) provenant d'au moins deux plages d'angles solides.

2. Dispositif selon la revendication 1, **caractérisé en ce qu'**un marquage dans la surface d'un objet individuel (10) est susceptible d'être composé d'un nombre, correspondant au nombre des premières/deuxièmes plages d'angles solides (5a ; 5b), de marquages partiels (34a ; 34b), chaque marquage partiel (34a ; 34b) provenant d'une autre plage d'angles solides étant susceptible d'être introduit dans la surface.

3. Dispositif selon la revendication 1, **caractérisé en ce qu'**au moins un élément (7) focalisant, en particulier mobile en translation/rotation, en particulier une lentille (7) ou un miroir incurvé, est disposé dans le trajet des rayons d'un rayon laser (2).

4. Dispositif selon la revendication 1, **caractérisé en ce qu'**un dispositif de déviation est réalisé avec un effet focalisant, en particulier sous forme de miroir bombé.

5. Dispositif selon la revendication 1, **caractérisé en ce qu'**un dispositif de déviation (30) est réalisé sous forme de miroir de déviation (30) plan et/ou mobile en translation/rotation.

6. Dispositif selon la revendication 1, **caractérisé en ce que** les rayons laser (2) sont focalisés de manière que, dans chacune des deuxièmes plages d'angles solides, la zone, à munir d'une inscription, de la surface d'un objet individuel (10) à marquer est disposée dans une plage de profondeur de champ autour du plan focal.

7. Dispositif selon la revendication 1, **caractérisé en ce que** des surfaces, à incurvation convexe et/ou concave d'un objet individuel (10) sont susceptibles d'être marquées avec lui.

8. Dispositif selon la revendication 1, **caractérisé en ce que** les marquages partiels (34a ; 34b) d'un marquage sont disposés permutés et/ou soumis à une symétrie spéculaire dans une commande hiérarchiquement supérieure, et les deuxièmes plages d'angles solides se croisent au-dessus de la surface, en particulier concave, à munir d'une inscription, et les marquages partiels (34a ; 34b) s'assemblent, du côté correct par rapport à un marquage global, sur la surface de l'objet individuel (10) à munir d'une inscription.

9. Procédé de marquage, en particulier d'application d'inscriptions sur des surfaces bombées d'un objet individuel au moyen d'une inscription au laser, avec au moins un système de déflexion de rayon laser (3 ; 4) susceptible d'être programmé librement, où
a) un rayon laser (2) est susceptible d'être dévié avec au moins un premier dispositif de déviation (30 ; 31), en fonction d'une déviation précédente au moyen du au moins un système de déflexion de rayon laser (3 ; 4) susceptible d'être programmé librement, dans au moins deux premières plages d'angles solides (5a ; 5b), en particulier ne se chevauchant pas les unes les autre, et
b) un rayon laser (2) provenant de chaque première plage d'angles solides (5a ; 5b) est dévié dans une deuxième plage d'angles solides respective, au moyen d'un deuxième dispositif de déviation (33a ; 33b), dans la direction d'un objet individuel (10) à marquer, les deuxièmes plages d'angles solides se chevauchant/se croisant au moins partiellement, de manière qu'
c) un objet individuel (10), disposé dans la zone de chevauchement/croisement des deuxièmes plages d'angles solides, puisse être marqué à l'aide de rayons laser (2) provenant d'au moins deux plages d'angles solides.

10. Procédé selon la revendication 9, **caractérisé en ce qu'**un marquage dans la surface d'un objet individuel est composé d'un nombre, correspondant au nombre des premières/deuxièmes plages d'angles solides (5a ; 5b), de marquages partiels (34a ; 34b), chaque marquage partiel (34a ; 34b) provenant d'une autre deuxième plage d'angles solides étant introduit dans la surface.

11. Procédé selon la revendication 9, **caractérisé en ce que** les rayons laser (2) sont focalisés de manière que, dans chacune des deuxièmes plages d'angles solides, la zone, à munir d'une inscription, de la surface d'un objet individuel (10) à marquer est disposée dans une plage de profondeur de champ autour du plan focal.

12. Procédé selon la revendication 9, **caractérisé en ce que** les marquages partiels (34a ; 34b) d'un marquage sont disposés permutés et/ou soumis à une symétrie spéculaire dans une commande hiérarchiquement supérieure, et les deuxièmes plages d'angles solides se croisent au-dessus de la surface, en particulier concave, à munir d'une inscription, de manière que les marquages partiels (34a ; 34b) s'assemblent, du côté correct par rapport à un marquage global, sur la surface de l'objet individuel (10) à munir d'une inscription.

13. Procédé selon la revendication 9, **caractérisé en ce que** des marquages partiels (34a ; 34b) sont établis, complètement et les uns après les autres, chaque fois à partir d'une plage d'angles solides.
